Europäisches Patentamt

European Patent Office

Office européen des brevets

(11) Veröffentlichungsnummer: **0 085 190**
**A1**

## (12) EUROPÄISCHE PATENTANMELDUNG

(21) Anmeldenummer: **82112126.6**

(22) Anmeldetag: **30.12.82**

(51) Int. Cl.³: **H 01 J 29/89**
**G 02 B 1/10**

(30) Priorität: **01.02.82 DE 3203291**

(43) Veröffentlichungstag der Anmeldung:
**10.08.83 Patentblatt 83/32**

(84) Benannte Vertragsstaaten:
**AT BE CH FR GB IT LI LU NL SE**

(71) Anmelder: **Heiz, Therese**
**Stengelmattstrasse 511**
**CH-6252 Dagmersellen(CH)**

(72) Erfinder: **Heiz, Hans**
**Stengelmattstrasse 511**
**CH-6252 Dagmersellen(CH)**

(74) Vertreter: **Hagemann, Heinrich, Dr. et al,**
**Patentanwälte GEYER, HAGEMANN & PARTNER**
**Postfach 860329**
**D-8000 München 86(DE)**

(54) Verfahren zur Ausbildung einer Entspiegelungsschicht auf Bildschirmen.

(57) Dabei wird auf die äußere Oberfläche des Bildschirms eine filmartige Schicht aus einem einen Firnis enthaltenden Mittel aufgetragen und diese firmartige Schicht in noch feuchtem Zustand mit einem weiteren Mittel in Form einer mit dem Firnis reaktionsfähigen, ein Silicat oder eine Kieselsäure enthaltenden wässrigen Dispersion behandelt. Es besteht auch die Möglichkeit, diese beiden Mittel vor dem Auftragen miteinander zu vermischen. In jedem Falle wird eine ausgehärtete Entspiegelungsschicht erhalten, die die Reflexionen weitgehend zurückdrängt.

EP 0 085 190 A1

Croydon Printing Company Ltd

GEYER, HAGEMANN & PARTNER

PATENTANWÄLTE

PROFESSIONAL REPRESENTATIVES BEFORE THE EUROPEAN PATENT OFFICE 0085190

Ismaninger Straße 108 · 8000 München 80 · Telefon O 089-98 07 31-34 · Telex 5-216 136 hage d · Telegramm hageypatent · Telekopierer 089-98 07 31
Briefanschrift Postfach 860 329 · 8000 München 86

- 1 -

u.Z.: Pat 237/2-82Ch

München, den
30. Dezember 1982
Dr.H/3/bw

## Verfahren zur Ausbildung einer Entspiegelungsschicht auf Bildschirmen

Die Erfindung betrifft ein Verfahren zur Ausbildung einer Entspiegelungsschicht auf Bildschirmen, bei denen sich reflektierende Strahlen nachteilig für die Betrachter auswirken.

Die störende Lichtreflexion von Fernsehbildschirmen wird täglich im häuslichen Bereich festgestellt. Bildschirme spielen jedoch auch in anderen Bereichen, z.B. in den Büros, in Industrieanlagen, in der Forschung, im Bereich des Personentransportes (z.B. Luftverkehr), bei der Objekt- und Betriebsüberwachung eine immer größere Rolle. Auch hier treten die nachteiligen Reflexionserscheinungen auf. Diese gehen auf ungünstige Lichtverhältnisse zurück, so daß Fremdlicht auf dem Bildschirm gespiegelt und das Beobachten des wiedergegebenen Bildes gestört wird. Das hat für den Betrachter nachteilige Folgen, die sich durch Augen- und Kopfschmerzen ausdrücken können. Hierdurch wird das Allgemeinbefinden stark gestört. Im Arbeitsbereich wird dadurch die Leistungsfähigkeit stark reduziert.

- 2 -

Es hat nicht an Versuchen gefehlt, die nachteilige
Reflexion von Bildschirmen auszuschließen oder zumindest zurückzudrängen. So ist es bekannt, zum Vermeiden derartiger Reflexionen die Bildschirme zu
entspiegeln. Eine Möglichkeit liegt in dem Aufbringen
einer dünnen Schicht eines transparenten Lackes auf
den Bildschirm. Die bisher hierfür vorgesehenen Lacke
liefern jedoch keine Lackschichten, die gegenüber
chemischen und mechanischen Putzmitteln beständig sind.
Daneben wurde vorgeschlagen, die Oberfläche des Bildschirms selbst zu profilieren oder eine profilierte
Vorsatzscheibe aufzubringen. Durch dieses Feinprofil
werden die Reflexionsstrahlen gestreut. Der reflektierte Gegenstand ist dann nur noch schwach oder gar nicht
mehr erkennbar. Die Profilierung des Bildschirms oder
der Vorsatzscheibe erfordert einen verhältnismäßig
hohen Aufwand. Bei der Verwendung von Vorsatzscheiben
wurden u.a. ebene Scheiben verwendet. Infolge der Krümmung des Bildschirmes haben sie über ihre Oberfläche
einen unterschiedlichen Abstand zum Bildschirm, was
zu einem unscharfen Bild führt. Um dieses Problem zu
beheben, wurde eine Vorsatzscheibe vorgeschlagen, die
ein- oder beidseitig geätzt ist und eine der sphärischen
Krümmung des Bildschirms angepaßte Oberfläche hat, wobei in dem Falle der einseitigen Ätzung die geätzte
Seite dem Beschauer zugewandt ist (vgl. DE-OS 2 723 788).
Eine derartige Vorsatzscheibe läßt sich jedoch nicht
für unterschiedlich gekrümmte Bildschirme anderer
Vorrichtungen einsetzen.

Nach einem weiteren bekannten Vorschlag wird zur Entspiegelung des Bildschirms ein Netz herangezogen (vgl. DE-OS 2 712 321). Dieses Netz wird auf den Bildschirm gelegt. Seine Maschenweite ist höchstens gleich dem Abstand der Bildelemente selbst. Senkrecht zur Zeilenrichtung ist dieser Abstand gleich dem Zeilenabstand. In Zeilenrichtung ist der Bildelementabstand durch die obere Grenzfrequenz des übertragenen Videosignals und die Abmessung des Bildschirms gegeben. Zweckmäßigerweise ist das Netz dunkel eingefärbt. Das Netz besteht vorteilhafterweise aus elastischen Fäden. Es kann bei beliebigen Bildschirmen eingesetzt werden, verstaubt jedoch leicht und befriedigt ebenfalls nicht bezüglich des Entspiegelungseffektes.

Der Erfindung liegt die Aufgabe zugrunde, ein Verfahren vorzuschlagen, nach dem einfach und billig eine höchsteffektive Entspiegelungsschicht auf einem Bildschirm ausgebildet werden kann.

Erfindungsgemäß wird diese Aufgabe dadurch gelöst, daß auf die äußere Oberfläche des Bildschirms

I) eine filmartige Schicht aus einem einen Firnis enthaltenden Mittel A) aufgetragen und diese filmartige Schicht im noch feuchten Zustand mit einem Mittel B) in Form einer mit dem Firnis reaktionsfähigen, ein Silicat oder eine Kieselsäure enthaltenden wässrigen Dispersion behandelt wird oder

II) eine frische Mischung des Mittels A) und des Mittels B) aufgetragen wird.

Wenn im Rahmen der vorliegenden Erfindung von "Bildschirmen" gesprochen wird, so ist dieser Begriff weitestgehend zu verstehen. So handelt es sich allgemein um Bildschirme von Sichtgeräten, bei deren Betrachtung Reflexionserscheinungen nachteilig sind. So kann es sich um Bildschirme von Fernsehgeräten, Schreibautomaten, Monitoren, Oszillographen, Röntgengeräten und dgl. handeln, so u.a. um solche, die auf dem Prinzip der Braunschen Röhre beruhen.

Für die Durchführung des erfindungsgemäßen Verfahrens sind die beiden obengenannten Mittel A) und Mittel B) zwingend erforderlich, um eine Entspiegelungsschicht auf den Bildschirmen auszubilden. Dabei kann, wie bereits deutlich gemacht, in zweierlei Weise vorgegangen werden. So kann bei der einen Variante eine filmartige Schicht aus einem Mittel aufgetragen, das einen Firnis enthält. Diese filmartige Schicht wird dann in noch feuchtem Zustande mit einem weiteren Mittel behandelt, in dem ein Silicat oder eine Kieselsäure in wässriger Dispersion enthalten ist. Das Silicat oder die Kieselsäure treten mit dem Firnis in chemische Wechselwirkung, um nach einem Trocknungsvorgang und nach einiger Zeit, in der Regel nach einigen Stunden, zu einer weitgehend ausgehärteten Entspiegelungsschicht zu kommen. Damit die Reaktion zwischen den obengenannten Reaktionspartnern ablaufen kann, darf die filmartige Schicht, die zunächst aus dem ein Firnis enthaltenden Mittel ausgebildet worden ist, noch nicht vollständig getrocknet sein, d.h. sie soll noch eine gewisse Feuchtigkeit aufweisen. Andernfalls wird das angestrebte Ergebnis nicht oder nicht ganz zufriedenstellend erreicht.

Eine zweite Möglichkeit, das erfindungsgemäße Verfahren durchzuführen, besteht darin, die beiden erwähnten, miteinander reagierenden Mittel (Mittel A) einerseits und Mittel B) andererseits) miteinander zu vermischen und diese Mischung dann zur Ausbildung einer filmartigen Schicht, die zu einer Entspiegelungsschicht erstarrt, heranzuziehen. Dabei ist es zweckmäßig, die Mischung unmittelbar vor ihrer Verwendung herzustellen, da sonst die Reaktion zwischen den beiden genannten Reaktionspartnern bereits so weit abläuft, daß der mit der Erfindung angestrebte Erfolg beeinträchtigt wird. Demzufolge sollte eine möglichst frische Mischung eingesetzt werden.

Wenn im Rahmen der Erfindung von "Firnissen" gesprochen wird, so handelt es sich dabei um Mittel der üblichen Definition. So stellen Firnisse nach DIN 55 945, Bl. 1 (Nov. 1968) den Sammelnamen für nicht-pigmentierte Anstrichmittel dar, die Öle oder Harzlösungen oder Mischungen von diesen enthalten. Man sollte deshalb die Benennung von Firnissen zusammen mit kennzeichnenden Wortzusätzen gebrauchen. So ist der wichtigste Firnis, nämlich Leinölfirnis, ein Leinöl, dem Trockenstoffe oder ihre Grundlagen bei 140 bis 150°C beigemischt worden sind. Kennzeichnend für Firnisse ist ihre gute Trocknungsfähigkeit. Im allgemeinen wird unter Firnis ein Öl verstanden, dessen Trocknungsfähigkeit durch Zusatz von Trockenstoffen, Sikkativen oder Trockenstoffgrundlagen wesentlich erhöht wurde. Die Firnisse sind Flüssigkeiten, die in dünner Schicht auf Gegenstände aufgetragen, durch chemische und physikalische Veränderungen zu einer festen, auf den Gegenständen haftenden Schicht werden (vgl. Römpps Chemie-Lexikon, 7. Auflage, Band 2, S. 1129).

Dem einen Firnis enthaltenden Mittel A) können verschiedene Zusätze beigefügt werden, von denen lediglich verlangt werden muß, daß sie die bereits erwähnte Reaktion zwischen dem Firnis und dem Silicat bzw. der Kieselsäure nicht beeinträchtigen.

Als Hilfsmittel können z.B. Mineralöle oder mineralölähnliche Stoffe herangezogen werden, die als Dispersionsmittel mit der zusätzlichen Funktion eines Trocknungsverzögerers dienen. "Mineralöle" stellen die Sammelbezeichnung für die aus mineralischen Rohstoffen (Erdöl, Erdwachs, Braun- und Steinkohle, Holz, Torf) gewonnenen flüssigen Destillationsprodukte dar, die im wesentlichen aus Gemischen von gesättigten Kohlenwasserstoffen bestehen. Mineralölähnliche Stoffe sollen solche Stoffe sein, die sich bezüglich ihres chemischen und physikalischen Verhaltens mit Mineralölen vergleichen lassen. Ein besonders geeignetes Dispersionsmittel stellt Paraffinöl dar. Hierbei handelt es sich um ein klares, farbloses, ölartiges Gemisch aus Kohlenwasserstoffen einer Dichte von mindestens 0,88 und eines Kochpunktes von mindest 360°C, das in Wasser und Alkohol unlöslich, in Äther, Benzol, Chloroform usw. löslich ist.

Dem Mittel A) können des weiteren Trübungs- bzw. Mittel zur Verstärkung der Mattierung zugegeben werden. Hierdurch wird die auf den Bildschirmen angestrebte Entspiegelungsschicht weniger durchsichtig, wodurch Reflexion und Streuung des Lichtes weiter herabgesetzt werden. Die Menge des Trübungsmittels darf jedoch nicht so hoch sein, daß die Bildqualität leidet. Ein bevorzugtes Trübungsmittel stellt Jasminöl der Qualität a) dar, obwohl es nicht zu den klassischen Trübungsmitteln zählt. Hierbei handelt es sich um ein rotbraunes, wachsartiges Blütenöl (vgl. Römpps Chemie-Lexikon, 7. Auflage, Bd. 3, S. 1660). Von besonderem Vorteil ist es, wenn dem Mittel A) noch antistatisch wirkende Mittel einverleibt werden. Dabei hat es sich gezeigt, daß insbesondere Siliconöle in Frage kommen, sofern sie die oben bereits erörterte Aushärtungsreaktion nicht beeinträchtigen. Bei den Siliconölen, die erfindungsgemäß weitgehend in Betracht kommen, handelt es sich in der Regel um linear-polymere Dimethylsiloxane (weniger häufig auch Methylphenylsiloxane). Sie stellen gewöhnlich klare, farblose, neutrale, geruchsfreie, hydrophobe Flüssigkeiten eines Molekulargewichts von 1000 bis 150.000, einer Dichte von 0,94 bis 0,97 und mit Viskositäten zwischen $0,1 \times 10^{-2}$ m²/s und $15 \times 10^{-2}$ m²/s dar. Sie sind löslich in Benzol, Toluol und aliphatischen, auch chlorierten Kohlenwasserstoffen. Die Siliconöle sind wenig beständig gegen starke anorganische Säuren und Basen, jedoch gegen Salze, einige Oxidationsmittel und Seifen. Sie sind gasdurchlässig und wasserabweisend (vgl. Römpps Chemie-Lexikon, 7. Auflage, Bd. 5, S. 3226). Von besonderem Vorteil als antistatisch wirkendes Mittel hat sich das sogenannte Baysilonöl A erwiesen.

Die Mengen, in denen die oben beschriebenen Zusatzmittel dem Mittel A) einverleibt werden können, sind nicht kritisch. Hauptbestandteil sollte jedoch stets der Firnis bleiben und ihre Mengen derartig gewählt werden, daß sie, wie bereits gesagt, die genannte Härtungsreaktion nicht beeinträchtigen.

Hauptbestandteil des Mittels B) sind Silicate und/oder Kieselsäuren, die dazu imstande sind, mit dem Firnis eine Reaktion einzugehen. Dabei ist es erstrebenswert, daß der Wassergehalt des Mittels B) möglichst niedrig gewählt wird. Es spielt keine Rolle, wenn ein geringer Teil der Silicate bzw. der Kieselsäure bereits in Gelform bzw. suspendierter Form vorliegt. Erstrebenswert ist jedoch eine homogene kolloidale Dispersion oder Lösungsdispersion. Besondere Eignung als Silicate zeigen Natrium-Wasserglas und Kalium-Wasserglas in wässriger Lösung. Unter Wasserglas versteht man aus dem Schmelzfluß erstarrte, glasige, wasserlösliche Kalium- und Natriumsilicate (Salze von Kieselsäuren) oder deren viskose wässrige Lösungen. Die Wassergläser sind in reinem Zustande durchsichtige, farblose, als technische Produkte durch Spuren von Eisen bräunlich bis grünlich oder auch gelblich bis braun gefärbte Gläser, die mit Wasser bei erhöhter Temperatur und Druck kolloidale klare, stark alkalisch reagierende Lösungen bilden. In kaltem Wasser sind die Wassergläser unlöslich, so daß es sich empfiehlt, daß sie zumindest bei Raumtemperatur weitgehend in dem wässrigen Medium des Mittels B) dispergiert werden. Ein vorausgegangenes Erhitzen ist zweckmäßig (vgl. Römpps Chemie-Lexikon, 7. Auflage, Bd. 6, S. 3883). In dem Falle, daß Kieselsäuren in dem Mittel B) enthalten sind, dürfen diese noch nicht so weit durch Wasserabspaltung in höhere Kieselsäuren überführt sein, daß die Härtungsreaktion mit den Firnissen nicht mehr abläuft. Wird beispielsweise Orthokieselsäure verwendet, dann ist die wässrige Phase des Mittels B) zweckmäßigerweise auf einen pH-Wert von 3,2 einzustellen, da bei diesem pH-Wert die Beständigkeit dieser Kieselsäure einige Zeit gewährleistet ist. Grundsätzlich können selbstverständlich die verschiedenen Salze der bekannten Kieselsäuren, sofern sie

- 9 -

**0085190**

der Forderung der Reaktionsfähigkeit mit dem Firnis entsprechen, verwendet werden. Dabei handelt es sich insbesondere um wasserlösliche Salze der Orthokieselsäure, Metakieselsäure und Dikieselsäure, insbesondere um die Alkalisilikate, vorzugsweise die Natrium- und Kaliumsilicate.

Überraschenderweise hat es sich gezeigt, daß eine Kombination aus Natrium-Wasserglas und Kalium-Wasserglas zu ganz besonders hervorragenden Ergebnissen führt, wobei die jeweiligen Mengen dieser Ausgangsmaterialen zweckmäßigerweise etwa gleich gewählt werden. Dabei zeigt sich erstaunlicherweise ein Effekt, der über den Summeneffekt der beiden Komponenten hinausgeht, d.h. ein synergistischer Effekt.

Dem Mittel B) können zusätzliche Mittel beigefügt werden, die zweckmäßigerweise wasserlöslich sind und die genannte Aushärtungsreaktion ebenfalls nicht beeinträchtigen.

Um in farblicher Hinsicht ein gefälligeres Bild auf den Bildschirmen zu erzielen, können fluoreszierende Stoffe beigegeben werden. Das erfolgt zweckmäßigerweise in kleinen Mengen. Dabei haben sich Fluorescein und dessen Derivate als besonders geeignet erwiesen. So kann beispielsweise dem Mittel Fluorescein in einer Menge von etwa 0,5 Gew.-% zugegeben werden.

Schließlich kann es auch von Vorteil sein, dem Mittel B), gegebenenfalls auch dem Mittel A), einen üblichen Farbstoff zuzuführen, dessen Farbe in Abhängigkeit von der

- 10 -

Farbe des jeweiligen Bildschirms gewählt wird. Hierdurch wird eine farbliche Angleichung erreicht. Die Wahl des jeweils besonders geeigneten Farbstoffs steht dem Fachmann frei. Er kann ihn ohne größeren Arbeitsaufwand im jeweiligen Einzelfall ermitteln. Im Falle von üblichen Fernsehbildschirmen hat sich das sogenannte Nerobraun (auch Nußbeize, Nußbraun oder Saftbraun genannt) als sehr geeignet erwiesen. Nerobraun stellt einen Farbstoff aus dem Alkalisalz von Huminsäuren dar, das aus dem sogenannten Kasselerbraun durch Laugenzusatz in Form schwarzglänzender, in Wasser mit brauner Farbe löslicher Schuppen aus 85 % Natriumhuminat entsteht (vgl. Römpps Chemie-Lexikon, 7. Auflage, Bd. 4, S. 2304). Die Einverleibung dieses Farbstoffs in das Mittel B) erfolgt regelmäßig in kleineren Mengen, z.B. in einer Menge von 0,5 Gew.-%.

In welchen Mengenverhältnissen die beiden oben beschriebenen Mittel A) und B) eingesetzt werden, um die der Erfindung zugrundeliegende Aufgabe zu lösen, läßt sich von dem Fachmann ohne weiteres anhand einfach durchzuführender Versuche ermitteln. Es wird regelmäßig bevorzugt, daß etwa 1 Gewichtsteil Silicat oder Kieselsäure (auf Trockensubstanz bezogen) auf 1 Gewichtsteil Firnis entfallen. Als weitere Richtlinie könnte ein Bereich von 1 bis 2 Gewichtsteile Silicat bzw. Kieselsäure auf 1 bis 2 Gewichtsteile Firnis angesehen werden.*/ Die weiteren oben erörterten zusätzlichen Bestandteile sollten bezüglich ihres gewichtsprozentualen Anteils so weit möglich zurücktreten, um die angestrebte Aushärtungsreaktion, über deren genauen Verlauf derzeit noch keine Klarheit besteht, möglich ungehindert ablaufen zu lassen.

*/ Dieser Bereich kann jedoch in Einzelfällen verlassen werden.

Die Gesamtmenge an Mittel A) und Mittel B), die pro m² Bildschirm aufgebracht wird, kann in der Größenordnung von 3 g liegen. Hiermit wird eine Entspiegelungsschicht von wenigen μm ausgebildet.

Als Hilfsmittel zum Aufbringen der Mittel A) und B), gegebenenfalls in Form ihrer Mischung, können z.B. Schwämme und Tücher und dgl. verwendet werden, wobei es allerdings vermieden werden sollte, daß sie selbst zum Teil in die aufgetragene filmartige Schicht bzw. letztlich in die Entspiegelungsschicht übergehen und störende Effekt verursachen. Ansonsten werden keine besonderen Anforderungen an das Hilfsmittel zum Aufbringen der Entspiegelungsschicht auf die Bildschirme gestellt.

Der besondere Vorteil des erfindungsgemäßen Verfahrens besteht darin, daß keine spezielle Kenntnis zu seiner Durchführung erforderlich ist. Jedermann kann anhand der gegebenen Lehre ohne weiteres seine Durchführung vornehmen und den angestrebten technischen Effekt der weitgehenden Entspiegelung des Bildschirms erreichen. Darüber hinaus zeigt das erfindungsgemäße Verfahren jedoch noch weitere, keineswegs zu erwartende Vorteile. So hat es sich bei entsprechenden Versuchen gezeigt, daß die sogenannte Impuls-Sprung-Wiedergabe d.h. die Wiedergabe von extremen Pegelunterschieden im Videosignal, praktisch nicht beeinflußt wird, die Verringerung der Modulationstiefe sehr gering ist und die Kantenwiedergabe unverändert gut bleibt. Die statische Aufladung der Bildschirme wird zurückgedrängt oder gar verhindert und schädliche Strahlen, die sich nachteilig auf den Betrachter auswirken können, werden weitgehend, nämlich bis zu 90% oder mehr, absorbiert. Die wünschenswerte Farbwiedergabe und Bildschärfe werden durch die erfindungsgemäß aufgebrachte Entspiegelungsschicht nicht beeinträchtigt.

Die Entspiegelungsschicht führt dazu, daß der Standort des Bildschirms frei gewählt werden kann, so daß im industriellen Bereich und im Bürobereich Arbeitsplätze nach neuesten Erkenntnissen gestaltet werden können.

Die obigen vorteilhaften Ergebnisse werden erfindungsgemäß mit Ausgangsmaterialien erreicht, die absolut giftfrei sind, weder Haut noch Schleimhäute angreifen, keine Dämpfe in bedrohlichem Maße entstehen lassen und weder Glas noch andere Materialien beschädigen. Gegebenenfalls ist es auch möglich, die aufgebrachte Entspiegelungsschicht zu entfernen. Normalerweise braucht sie nicht erneuert zu werden.

Nachfolgend soll die Erfindung noch weiter anhand von zwei Beispielen erläutert werden.

Beispiel 1

Zunächst wurde ein Bildschirm mit einem trockenen und weichen Tuch gereinigt. Darauf wurde das Mittel A) folgender Zusammensetzung mittels eines Schwammes in einer Menge von etwa 1,5 g auf den Bildschirm einer Oberfläche von etwa 0,64 m² aufgebracht:

1) 65 Gew.-% Leinfirnis
2) 30 Gew.-% Paraffinöl
3) 4,5 Gew.-% Jasminöl
4) 0,5 Gew.-% Baysilonöl A (Siliconöl)

Auf diese noch feuchte Schicht wurde das Mittel B) folgender Zusammensetzung und in einer Menge von insgesamt 1,5 g aufgebracht:

1) 59 Gew.-% Natrium-Wasserglas (Natriumsilicat) 40 Gew.-% Kalium-Wasserglas (Kaliumsilicat)

2) 0,5 Gew.-% Fluorescein

3) 0,5 Gew.-% Nerobraun.

Auch hier erfolgte der Auftrag mittels eines Schwamms. Dabei wurde das Mittel B) mit dem Schwamm so lange durch Druckeinwirkung bzw. Reiben verteilt, bis eine homogene und gleichmäßige Schicht erkennbar war. Anschließend setzte die Aushärtung der Entspiegelungsschicht ein. Die ausgehärtete Entspiegelungsschicht schloß störende Reflexionen weitestgehend aus.

Beispiel 2

Ein weiterer Bildschirm wurde mit einem trockenen und weichen Tuch gereinigt. Darauf wurden die beiden Mittel A) und B) des Beispiels 1 vermischt und unmittelbar darauf in einer Menge von insbesamt 3 g auf den Bildschirm gleichmäßig aufgetragen bzw. aufgerieben, um auf diese Weise die Entspiegelungsschicht auszubilden. Es setzte das Härten ein, wonach eine ausgehärtete Entspiegelungsschicht entstand, die Reflexionen weitgehend ausschloß.

Eoerstenstr. 14 · 8000 München 80 · Telefon (089) 98 07 31 34 · Telex 5 216 136 hage d · Telegramm hageypatent · Telekopierer 089 98 07 31
briefanschrift Postfach 860 329 · 8000 München 86

- 1 -

Therese Heiz, Dagmersellen
u.Z.: Pat 237/2-82Ch

München, den
30. Dezember 1982
Dr.H/3/bw

Patentansprüche

1. Verfahren zur Ausbildung einer Entspiegelungsschicht auf Bildschirmen, dadurch g e k e n n z e i c h n e t , daß auf die äußere Oberfläche des Bildschirms

(I) eine filmartige Schicht aus einem einen Firnis enthaltenden Mittel A) aufgetragen und diese filmartige Schicht in noch feuchtem Zustand mit einem Mittel B) in Form einer mit dem Firnis reaktionsfähigen, ein Silicat oder eine Kieselsäure enthaltenden wässrigen Disperson behandelt wird oder

(II) eine frische Mischung des Mittels A) und des Mittels B) aufgetragen wird.

2. Verfahren nach Anspruch 1, dadurch gekennzeichnet, daß als Mittel B) eine viskose wässrige Lösung eines Alkalisilicats verwendet wird.

3. Verfahren nach Anspruch 2, dadurch gekennzeichnet, daß als Alkalisilicat Kalium- und Natriumsilicat bzw. Kalium- und Natrium-Wasserglas kombiniert verwendet werden.

4. Verfahren nach den Ansprüchen 1 bis 3, dadurch gekennzeichnet, daß ein ein Dispersionsmittel enthaltendes Mittel A) verwendet wird.

5. Verfahren nach Anspruch 4, dadurch gekennzeichnet, daß als Dispersionsmittel Paraffinöl gewählt wird.

6. Verfahren nach den Ansprüchen 1 bis 5, dadurch gekennzeichnet, daß dem Mittel A) ein Trübungsmittel und/ oder ein antistatisch wirkendes Mittel einverleibt werden.

7. Verfahren nach den Ansprüchen 1 bis 6, dadurch gekennzeichnet, daß dem Mittel B) fluoreszierende Substanzen und/oder färbende Substanzen zur optischen Anpassung der ausgebildeten Entspiegelungsschicht an den Bildschirm einverleibt werden.

**0085190**
Nummer der Anmeldung

EP 82 11 2126

# EUROPÄISCHER RECHERCHENBERICHT

Europäisches
Patentamt

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | GB-A- 975 176 (CORNING GLASS WORK) <br> * Seite 6, Zeilen 13-50 * | 1 | H 01 J 29/89 <br> G 02 B 1/10 |
| A | GB-A- 538 274 (BRITISH SCIENTIFIC INSTRUMENT RESEARCH ASSOCIATION) <br> * Seite 3, Zeilen 106-121; Seite 4, Zeilen 22-35 * | 1 | |
| A | US-A-2 356 553 (G.J. WEISSENBERG) <br> * Seite 4, Zeilen 19-35 * | 1 | |
| A | FR-A-1 326 530 (SAINT GOBAIN) <br> * Zusammenfassung, Seite 2 * | 1 | |
| A | DE-C- 940 138 (DR. K. MAENNCHEN) <br> * Seite 2, Zeilen 64-86 * | 1 | |
| A | DE-A-2 016 074 (RCA) <br> * Seite 11 * | 1 | |

RECHERCHIERTE
SACHGEBIETE (Int. Cl. ³)

H 01 J 29/00
G 02 B 1/00
C 03 C 17/00
H 04 N 5/00

Der vorliegende Recherchenbericht wurde für alle Patentansprüche erstellt.

| Recherchenort <br> DEN HAAG | Abschlußdatum der Recherche <br> 29-04-1983 | Prüfer <br> ANTHONY R.G. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument. das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03.82